# EUROPEAN PATENT SPECIFICATION

(11) **EP 0 498 811 B1**
(45) Date of publication and mention of the grant of the patent: **09.04.1997**
(21) Application number: 90915370.2
(22) Date of filing: 17.09.1990
(51) Int. Cl.: G01N 21/88

(54) **ENGINEERED VIDEO INSPECTION LIGHTING ARRAY**
BELEUCHTUNGSARRAY ZUR VIDEOPRÜFUNG
APPAREIL D'ECLAIRAGE POUR CONTROLE VIDEO

(30) Priority: 31.10.1989 US 429780
(43) Date of publication of application: 19.08.1992
(73) Proprietor: PRESSCO TECHNOLOGY INC., Solon, Ohio 44139-1847 (US)
(72) Inventor: COCHRAN, Don, W., Mayfield Village, OH 44040 (US); AUSTIN, James, R., Mentor, OH 44060 (US)
(74) Representative: Kador & Partner
(86) International application number: US9005268
(87) International publication number: WO9106846

(56) References cited:
- EP-A- 0 061 021
- EP-A- 0 356 680
- US-A- 4 555 635
- US-A- 4 697 076
- US-A- 4 758 084
- US-A- 4 882 498
- US-A- 4 912 318

## Description

### Background of the Invention

The subject application is a continuation-in-part of co-pending U.S. Application Serial No. 336,642 filed April 7, 1989 as a file-wrapper continuation of U.S. Application Serial No. 107,265 filed October 9, 1987; and co-pending U.S. Application Serial No. 409,148 filed September 19, 1989, the contents of all of which are incorporated herein by reference.

This application pertains to the art of video inspection, and more particularly to inspection systems for a sequence of generally uniform articles. The invention is particularly applicable to inspections of containers or components thereof, and will be described with particular reference thereto. It will be appreciated, however, that the invention has broader applications, such as in any video inspection environment or machine vision system.

EP-A-0 356 680 represents prior art under Art. 54(3) EPC. US-A-4 758 084 discloses an apparatus for optical inspection of a bottle neck using a camera. Illumination is provided either by an annular arrangement of individual sources or by reflection of collimated light from an annular mirror.

Machine vision systems have secured a significant presence in industry, both in the area of robotic assembly systems as well as inspection systems to aid in quality control. A typical vision system includes a lighting system to light a specimen, and a camera for sensing light reflected therefrom. In a typical system, a digitized image is formed from light, reflected from the specimen, received by the camera. This digitized image data is then made available for controlling a robot arm, identifying the specimen, or determining acceptability of the specimen in accordance to specified standards.

A problem arises when inspecting specimens having curved surfaces or interior compartments. Conventional lighting systems are ineffective for obtaining images given that varying angles provide for mirror imaging of the light source on the specimen or reflection of light away from the camera's lens. As a result, inspections of such articles are at best imperfect or at worst impossible with present systems.

The present invention contemplates a new and improved video inspection system which overcomes the above-referred problems, and others, and provides a video inspection system which allows for accurate inspection of specimens having varying contours and internal portions.

### Summary of the Invention

In accordance with the present invention, there is provided a video inspection lighting apparatus which includes a plurality of directional light generating elements. A means is provided for securing each electronic light generating element into a three-dimensional array having an interior portion and an exterior portion, with each light generating element being mounted on the interior portion and directed to an associated lighting area. An aperture portion is defined in one area of the mounting means. A video camera, secured in the exterior portion of the lighting array, has a lens extending therefrom, through the aperture portion, generally into the interior of the array. A means is provided for supplying a current pulse to at least a portion of the light generating elements of the array, whereby illumination of an associated specimen disposed in the lighting area is accomplished.

Data processing means, which receive image from the video camera means resultant from illumination of the associated lighting area by application of the single current pulse to the portion of light generating elements of the array, include comparison means for comparing the image data to data representative of a range of acceptable image data. Means are provided for determining acceptability of the associate specimen in accordance with an output of the comparison means.

According to a favored embodiment of the invention, an engineered lighting video inspection apparatus comprises: lighting means for supplying a single high intensity, short duration light pulse to an associated specimen, said lighting means comprising a plurality of directional electronic light generating elements; and mounting means for securing each element of the plurality into a three-dimensional lighting array, the mounting means defining an interior portion and an exterior portion, wherein each of the light generating elements is secured to the interior portion such that is generally directed to the associated specimen; the mounting means defining an aperture portion; video camera means, including a lens portion, for generating image data from received light of the light pulse into the lens portion after reflection thereof off the associated specimen; means for securing the lens so that it extends through the aperture portion into the interior portion defined by the mounting means; first and second signal processor means having uniquely defined first and second gain levels, respectively; means for communicating at least a portion of the image data to the first and second signal processors, whereby first and second processed signals are formed therefrom, respectively, from received image data; first and second data processing means for comparing received signal data with data representative of acceptable specimens to determine acceptability thereof; and means for communicating the first and second processed signals to the first and second data processors, respectively.

In accordance with a more limited aspect of the present invention, means is provided for receiving image data from the video camera, and causing a comparison of the image data to data representative of an acceptable specimen.

In accordance with a yet more limited aspect of the present invention, means is provided for communicating image data obtained from the video camera to first and second signal processors. The first signal processor has a first selected gain level and the second signal processor has a second signal gain level different from that of the first data processor. Data obtained from the first and second signal processors is then independently compared to data representative of acceptability of a specimen under data obtained at the particular gain level.

An advantage of the present invention is the provision of a system which allows for engineered illumination, and video inspection, of items having varying contours.

Another advantage of the present invention is provision of a system which allows for isolation of selected portions of a specimen under consideration in accordance with lighting levels across that portion.

Yet another advantage of the present invention is a provision of a system which allows for simultaneous comparison of images at various intensity levels obtained from various portions of a single specimen to independently determine acceptability thereof in accordance with preselected standards.

Further advantages will become apparent to one of ordinary skill in the art upon a reading and understanding of the subject specification.

### Brief Description of the Drawings

The invention may take physical form in certain parts and arrangements of parts, preferred embodiments of which will be described in detail in this specification, and illustrated in the accompanying drawings which form a part hereof and wherein:
FIGURE 1 illustrates a cross-sectional view of a system for illuminating, acquiring data, and analyzing acquired data, for video inspection of a specimen;
FIGURE 2 illustrates, in detail, a lighting of a specimen in conjunction with the system of FIGURE 1;
FIGURE 3 illustrates a cross-sectional view of another embodiment of a lighting apparatus adapted for illumination of rib surfaced specimens, or the like; and
FIGURE 4 illustrates a perspective view of a suitable construction three-dimensional lighting array as used in the apparatuses of FIGURES 1 and 3.

### Detailed Description of the Preferred Embodiments

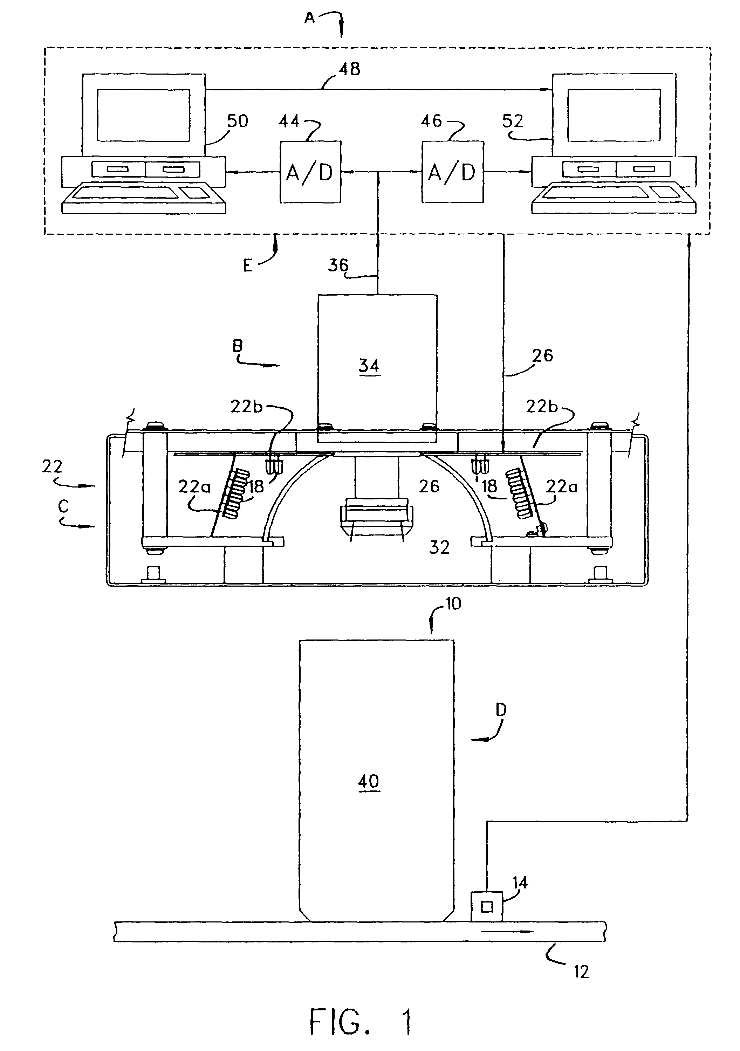

Turning now to the figures, wherein the illustrations are for the purposes of describing of the preferred embodiments only, and not for the purpose of limiting the same, FIGURE 1 illustrates a video inspection system A which includes a camera module B, a lighting unit C, a specimen D, and a data processing system E.

In the preferred embodiment, the specimen D is brought to an illumination area 10 by a conveyor belt or means 12. Presence of the specimen D within the illumination area 10 is suitably determined by a position sensor 14, illustrated as a photo sensitive detector, or other suitable tracking mechanism. In FIGURE 1, the specimen D is illustrated as a beverage container 16, for which structure the illustrated system is particularly advantageous.

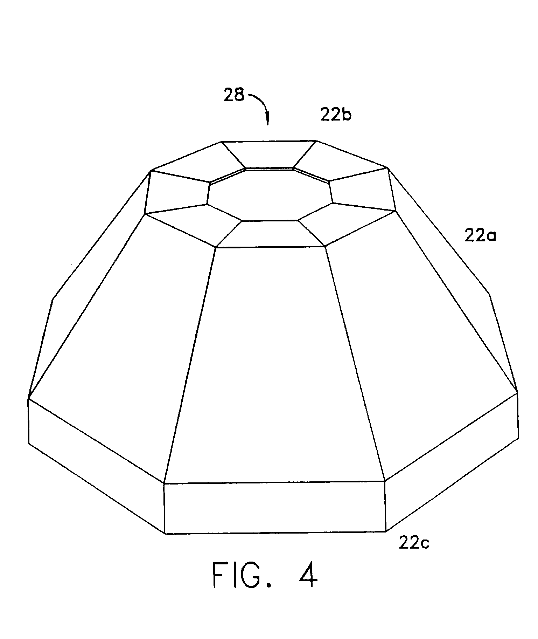

The lighting unit C includes a plurality of directional electronic light generating elements 18 which are, in the preferred embodiment, solid-state lighting emitting diodes, or the like. The elements 18 together form an array 20. The light generating elements 18 are secured on and directed into an interior portion of the array 20, by a circuit board or mounting means 22. The mounting means 22 forms a three-dimensional lighting array having an angled vertical portion 22a and a generally perpendicular portion 22b, both orientations being defined in relation to a single longitudinal axis or optical centerline of the camera module B. Particular constructions of the array 20 will be more easily visualized in conjunction with FIGURE 4, described in more detail below.

Engineered lighting of specimens may be generally accomplished by regulating a time duration during which any or all elements are activated; regulating a magnitude of current supplied to any or all elements; or selectively enabling any or all of light emitting elements of the array. These factors provide means by which lighting conditions may be regulated or tuned to various specimens. In the preferred embodiment, bank switching of light emitting diodes is employed. That is to say, selected individual banks of light emitting elements are enabled during a specified illumination period. This is accomplished by software control of the data processing system E, as preselected by a human applicator, or alternatively, by automated feedback tuning in accordance with a suitable feedback algorithm.

Presence of a specimen D in viewing area 10, as sensed by position sensor 14, is communicated to the data processing system E. This, in turn causes a single short-duration, high-current pulse to be applied to selected of the elements 18 through path illustrated at 26. Light thus generated from enabled elements 18 is then preferably passed through an arcuate diffuser plate or means 26, which diffuser has an aperture portion 28 therethrough. Light, rendered more uniform by a passage thereof through the diffuser 26, is then exposed to specimen D disposed in the illumination area 10. Light reflected from the specimen D is then received by a lens portion 32, and there after applied to light sensitive elements disposed within a video camera means 34 of camera module B.

Although the illustration of camera module B evidences one camera therein, it will be appreciated that multiple camera means, sensitive along the same optical centerline, may be utilized. This may be accomplished by use of a beam-splitter arrangement disposed between the camera module B, and the specimen D. Such dual camera arrangements allow for independent analysis of various subportions of a specimen, or allow for alignment of an image in a feedback process.

In the illustrated embodiment, the lens portion 32 extends into the interior of the three-dimensional array 20, as well as into the interior of the arcuate diffuser 26. The lens portion 32 preferably includes a wide angle or "fisheye" lens having a high depth of field. This arrangement provides for maximizing the amount of light transmitted to a specimen, optimizing the angles at which the light travels to the specimen, and improving the integrity of a captured image.

As will be appreciated by one or ordinary skill in the art, the light thus exposed to the video camera means creates image data representative of the illuminated object. Image data is communicated from the video camera means 34, via connection 36, to the data processing system E.

Image data passed via connection 36 in the above-described manner includes data representative of all salient internal portions of the specimen D. It is to be realized, however, that present technology renders it difficult to immediately extract data representative of acceptability of an image given that various lighting subportions of the specimen D have been subjected to varying intensity levels, thus creating a wide swing in intensities over the entire specimen. In particular, for example, it will be appreciated that a rim portion 40 will be subject to an overall increase in intensity, over that of, for example, a bottom segment 42 of the specimen D. The present invention advantageously provides a system for allowing complete analysis of any such subportion, notwithstanding the wide swing in intensities over the specimen.

To accomplish this, the image data received from connection 36, which in the preferred embodiment is in analog form, is passed to first and second signal processing elements or means 44 and 46 respectively, each of which preferably includes an analog-to-digital ("A/D") convertor. Accordingly, image data received along a single optical centerline, from at least one camera, is conveyed to both signal process elements 44, 46.

The first and second A/D convertors of first and second signal processors 44 and 46 each have unique gain characteristics defined thereby, whereby various segments of the image data may be seized upon for analysis. A feed-forward line 48 is also advantageously provided for communicating data from data processing element 50 to data processing element 52. Such data may include alignment data to fix a location for analysis by processing element 52.

In the preferred embodiment, outputs from first and second A/D convertors are communicated to first and second data processing elements 50 and 52, respectively. The use of two such data processing elements provides for highspeed, parallel image analysis. Each processing element 50 and 52 provides for a comparison of acquired, now digitized, image data to data representative of acceptable or unacceptable specimens. In the event that it is determined in either data processing element that the specimen is unacceptable, this data is made available to the system for rejection of the specimen at a point downstream on the conveyor means 12 from the illumination area 10.

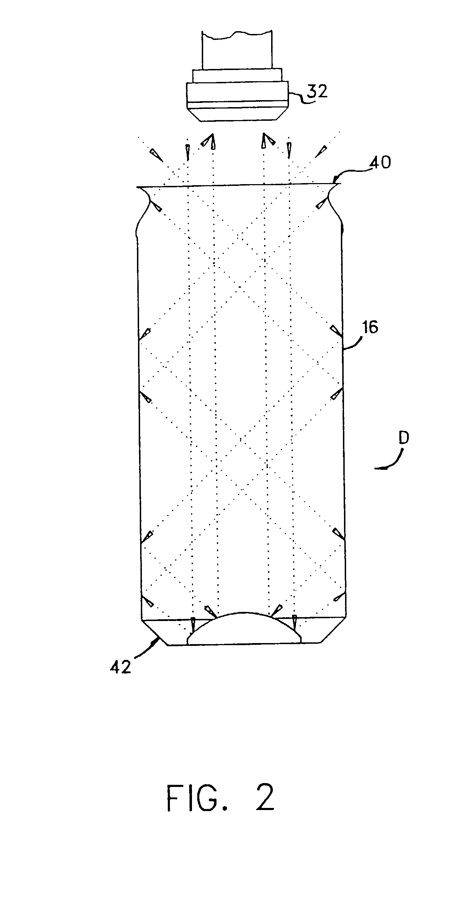

Turning now to FIGURE 2, illumination of the specimen D illustrated as beverage container 16, by virtue of the lighting unit C of FIGURE 1 will be understood more clearly. It will be seen from the figure that light entering the specimen D, is provided to all portions of the specimen. Lighting is obtained both directly, from the light generating elements 18 (FIGURE 1), and indirectly from the lighting generating elements 18 via internal reflection from the walls, sides, and bottom of the specimen. It will be appreciated from a review of the figure that a significant portion of the light is reflected from various portions of the specimen to the lens portion 32, such as described in more detail above. The system therefore provides means for acquiring data of the entire specimen internally, sufficient to render determination of acceptability therefrom.

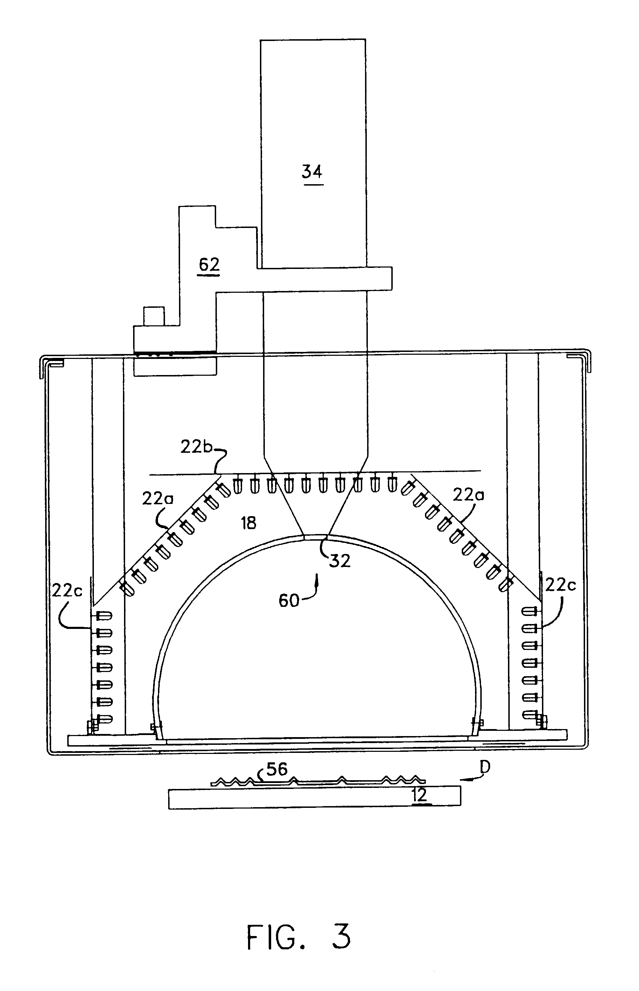

Turning now to FIGURE 3, an embodiment of the subject invention specifically well suited for inspection of specimens which while generally planar, have ribbed or curved extension thereon will be described. Where possible, numeric indications have been carried forward from FIGURE 1 to analogous structural components of FIGURE 3.

In the embodiment of FIGURE 3, the lighting unit C includes an array of directional lighting generating elements 18, again preferably comprised of solid-state LEDs. The mounting means 22 includes, in addition to portions analogous to that 22a and 22b of FIGURE 1, portions 22c which are disposed in an orientation generally parallel to a longitudinal axis of video camera means 34. The construction of the lighting array of FIGURE 3 provides for an additional number of angles at which light from individual elements 18 may be reflected from the specimen D, illustrated as a food can end 56, to lens portion 32 of video camera 34. As with the embodiment of FIGURE 1, a arcuate diffuser means 26 is advantageously provided between the specimen D and the array of lighting emitting elements 18 to provide more even bathing of the specimen.

In the embodiment of FIGURE 3, unlike that of FIGURE 1, the lens portion 32 extends only to the arcuate diffuser 26, and not within an interior defined thereby. An opening 60 defined by diffuser 26 is advantageously kept at a minimum size to minimize reflections on the specimen, and to maximize available lighting to be applied from the array. This is suitably accomplished by utilization of a pinhole lens arrangement. The camera 34 is secured in this position via mounting bracket 62. As illustrated in the figure, a conical lens arrangement is suitably utilized to accomplish the desired minimization of the size of opening 60.

It will be appreciated that the structure of FIGURE 3, although not illustrated, is advantageously applied to an environment, such as that of FIGURE 1, including the data processing system E, conveyor means 12, and position sensor 14.

Turning now to FIGURE 4, a perspective view of a suitable fabrication structure for mounting means 22 is presented. The perspective view affords ease in visualization not possible by the cut-away views of FIGURES 1 and 3. From the illustration, it will be seen that the mounting means is suitably fabricated from a series of trapezoidal-shaped portions or rectangular-shaped portions, interconnected as illustrated. The trapezoidal-shape portions are advantageously fabricated from printed-circuit board on which the directional lighting generating elements 18 are directly mounted. It will be appreciated that, in addition to the fabrication technic illustrated by FIGURE 4, other techniques, such as utilization of flexible circuit board material are also suitably provided. Such circuit board provides an ability to have specialized, shaped or rolled, lighting arrangements to be adapted for use with a given structure.

The invention has been described with reference to a preferred embodiment. Obviously, modifications and alterations will occur to others upon a reading and understanding of this specification. It is intended to include all such modifications and alterations insofar as they come within the scope of the appended claims or the equivalents thereof.

## Claims

1. An engineered lighting video inspection apparatus comprising:
a plurality of directional light generating elements;
mounting means for securing each light generating element of the plurality into a three-dimensional lighting array, the mounting means defining an interior portion and an exterior portion, wherein each of the light generating elements is secured to the interior portion such that it is directed to an associated lighting area;
the mounting means defining an aperture portion;
video camera means for generating image data from light exposed the lens extending therefrom; and
means for securing the lens in the interior portion of the three-dimensional lighting array such that it extends through the aperture portion;
means for concurrently supplying a current pulse of a selected value to each of selected light generating elements of the array to provide illumination to the associated lighting area for illumination of an associated specimen;
data processor means for receiving image from the video camera means resultant from illumination of the associated lighting area by application of the single current pulse to the portion of light generating elements of the array;
the data processor means including comparison means for comparing the image data to data representative of a range of acceptable image data; and
means for determining acceptability of the associated specimen in accordance with an output of the comparison means.

2. The engineered video inspection system of claim 1 further comprising means for selectively altering light generating elements forming the selected light generating elements of the array to which the current pulse is applied.

3. The engineered lighting video inspection system of claim 1 further comprising:
arcuate diffuser means for selectively homogenizing light transmitted to the associated lighting area from the light generating elements, the diffuser means defining a second aperture portion; and
means for securing the diffuser means between the three-dimensional lighting array and the associated lighting area such that the lens extends at least to the second aperture portion.

4. The engineered lighting video inspection apparatus of claim 3 wherein the image data generated by the video camera means includes analog data representative of an intensity value of each pixel of two dimensional array thereof, and wherein the apparatus further comprises:
the data processor means including a first signal processor having a first selected signal gain level, and a second signal processor having a second selected signal gain level different from the first selected signal gain level;
means for communicating the image data to the first signal processor whereby first processed image data is formed therefrom;
means for communicating the image data to the second signal processor whereby second processed image data is formed therefrom;
the comparison means including first correlation means for correlating the first processed image data to data representative of a range of acceptable image data of a first portion of the associated specimen; and
the comparison means including second correlation means for correlating the second processed image data to data representative of acceptable image data of a second portion of the associated specimen uniquely defined from the first portion thereof.

5. The engineered lighting video inspection apparatus of claim 4 wherein the first and second comparing means include first and second processor elements, respectively, and wherein the data processor means further includes means for simultaneously enabling the first and second processor elements.

6. The engineered lighting video inspection system of claim 5 wherein the first signal processor includes a first analog-to-digital convertor and wherein the second signal processor includes a second analog-to-digital convertor, whereby the first and second processed signals include first and second digitized signals, respectively.

7. An engineered lighting video inspection apparatus comprising:
lighting means for supplying a single high intensity, short duration light pulse to an associated specimen, said lighting means comprising:
a plurality of directional electronic light generating elements;
mounting means for securing each element of the plurality into a three-dimensional lighting array, the mounting means defining an interior portion and an exterior portion, wherein each of the light generating elements is secured to the interior portion such that it is generally directed to the associated specimen; and
the mounting means defining an aperture portion;
video camera means, including a lens portion, for generating image data from received light of the light pulse into the lens portion after reflection thereof off the associated specimen;
means for securing the lens so that it extends through the aperture portion into the interior portion defined by the mounting means;
first and second signal processor means having uniquely defined first and second gain levels, respectively;
means for communicating at least a portion of the image data to the first and second signal processors, whereby first and second processed signals are formed therefrom, respectively, from received image data;
first and second data processing means for comparing received signal data with data representative of acceptable specimens to determine acceptability thereof; and
means for communicating the first and second processed signals to the first and second data processors, respectively.

8. The engineered lighting video inspection apparatus of claim 7 further comprising means for simultaneously performing comparisons with the first and second data processors.

9. The engineered lighting video inspection apparatus of claim 8 wherein the video camera means includes means for generating the image data as data representative of a two dimensional array of pixels, each pixel having gray-scale level representative of an intensity of reflected light associated therewith.

10. The engineered lighting video inspection apparatus of claim 9 wherein:
the first and second signal processor means each include an analog-to-digital convertor, whereby the first and second processed signals each include a digitized representation of an image of the associated specimen;
the first and second data processors each include means for comparing each of the first processed signals with digitized data representative of acceptable specimens.

11. The engineered lighting video inspection apparatus of claim 7 further comprising means for securing the lens such that it extends generally to the aperture portion from the exterior portion.

12. An engineered lighting video inspection apparatus comprising:
a lighting array including:
a plurality of directed light generating elements;
mounting means for securing each element of the plurality into a three-dimensional lighting array, the mounting means defining an interior portion and an exterior portion, wherein each of the lighting elements is secured to the interior portion such that it is directed to an associated lighting area, and
the mounting means defining an aperture portion;
video camera means including a lens portion;
means for securing the video camera means in relation to the lighting array such that the lens portion extends through the aperture portion, terminating in the interior portion;
means for conveying a series of associated specimens to the associated lighting area;
means for determining a presence of each of the series of associated specimens within the lighting area;
means for selectively supplying current to the plurality of lighting elements, whereby an associated specimen is illuminated by light resultant therefrom;
means for communicating image data generated by the video camera means from light reflected from an illuminated associated specimen into the lens portion thereof;
means for communicating the image data to first and second analog-to-digital conversion means, each having uniquely defined gain levels, whereby first and second digitized image data portions are formed;
first comparing means for comparing the first digitized image data portion to data representative to acceptability of a specimen corresponding to digitized data processed at a first gain level;
second comparing means for comparing the second digitized image data portion to data representative of acceptability of a specimen corresponding to digitized data processed at a second gain level.

13. The engineered lighting video inspection system of claim 12 wherein each of the first and second comparing means includes independent data processors.

14. The engineered lighting video inspection system of claim 13 further comprising means for determining acceptability of each of the series of associated specimens in accordance with an output of at least one of the first and second comparing means.

15. The engineered video inspection system of claim 1 further comprising means for selectively altering light generating elements forming the selected light generating elements of the array to which the current pulse is applied.

## Patentansprüche

1. Videoprüfvorrichtung mit eingebauter Beleuchtung, die enthält:
mehrere Elemente, die gerichtetes Licht erzeugen;
Montageeinrichtungen zum Befestigen der jeweiligen lichterzeugenden Elemente in einer dreidimensionalen Beleuchtungsanordnung, wobei die Montageeinrichtungen einen inneren Abschnitt und einen äußeren Abschnitt definieren, und wobei jedes der lichterzeugenden Elemente am inneren Abschnitt befestigt ist, so daß es auf einen zugeordneten Beleuchtungsbereich ausgerichtet ist;
wobei die Montageeinrichtung einen Bildöffnungsabschnitt definiert;
eine Videokameraeinrichtung zum Erzeugen von Bilddaten aus dem Licht, das in deren Objektiv einfällt; eine Einrichtung zum Befestigen des Objektivs im inneren Abschnitt der dreidimensionalen Beleuchtungsanordnung, derart, daß es sich durch den Bildöffnungsabschnitt erstreckt;
eine Einrichtung zum gleichzeitigen Zuführen eines Stromimpulses mit einer ausgewählten Größe an die jeweiligen ausgewählten lichterzeugenden Elemente der Anordnung, um den zugeordneten Beleuchtungsbereich und ein zugehöriges Probestück zu beleuchten;
eine Datenprozessoreinrichtung zum Empfangen des Bildes von der videokameraeinrichtung, das aus der Beleuchtung des zugehörigen Beleuchtungsbereichs durch Beaufschlagen des Abschnitts der lichterzeugenden Elemente der Anordnung mit einem einzelnen Stromimpuls resultiert;
wobei die Datenprozessoreinrichtung versehen ist mit einer Vergleichseinrichtung zum Vergleichen der Bilddaten mit Daten, die einen Bereich von annehmbaren Bilddaten darstellen; und
eine Einrichtung zum Ermitteln der Annehmbarkeit des zugehörigen Probestücks in Abhängigkeit von einem Ausgangssignal der Vergleichseinrichtung.

2. Videoprüfsystem mit eingebauter Beleuchtung nach Anspruch 1, das ferner eine Einrichtung enthält zum wahlweisen Wechseln der lichterzeugenden Elemente, die die ausgewählten lichterzeugenden Elemente der Anordnung bilden, die mit dem Stromimpuls beaufschlagt werden.

3. Videoprüfsystem mit eingebauter Beleuchtung nach Anspruch 1, das ferner umfaßt:
eine bogenförmige Diffusoreinrichtung zum wahlweisen Homogenisieren des von den Lichterzeugungselementen zum zugeordneten Beleuchtungsbereich übertragenen Lichts, wobei die Diffusoreinrichtung einen zweiten Bildöffnungsabschnitt definiert; und
eine Einrichtung zum Befestigen der Diffusoreinrichtung zwischen der dreidimensionalen Beleuchtungsanordnung und dem zugeordneten Beleuchtungsbereich, derart, das sich das Objektiv wenigstens bis zum zweiten Bildöffnungsabschnitt erstreckt.

4. Videoprüfvorrichtung mit eingebauter Beleuchtung nach Anspruch 3, in der die Bilddaten, die von der Videokameraeinrichtung erzeugt werden, Analogdaten enthalten, die für jedes Pixel in einer zweidimensionalen Anordnung einen Intensitätswert repräsentieren, und wobei die Vorrichtung ferner umfaßt:
eine Datenprozessoreinrichtung, die versehen ist mit einem ersten Signalprozessor mit einem ersten ausgewählten Signalverstärkungspegel sowie einem zweiten Signalprozessor mit einem zweiten ausgewählten Signalverstärkungspegel, der sich vom ersten ausgewählten Signalverstärkungspegel unterscheidet;
eine Einrichtung zum Weiterleiten der Bilddaten zum ersten Signalprozessor, von welchem erste verarbeitete Bilddaten erzeugt werden;
eine Einrichtung zum Weiterleiten der Bilddaten zum zweiten Signalprozessor, von dem zweite verarbeitete Bilddaten erzeugt werden;
wobei die Vergleichseinrichtung versehen ist mit einer ersten Korrelationseinrichtung zum Korrelieren der ersten verarbeiteten Bilddaten mit Daten, die einen Bereich von annehmbaren Bilddaten eines ersten Abschnitts des zugeordneten Probestücks darstellen; und
wobei die Vergleichseinrichtung versehen ist mit einer zweiten Korrelationseinrichtung zum Korrelieren der zweiten verarbeiteten Bilddaten mit Daten, die annehmbare Bilddaten eines zweiten Abschnitts des zugehörigen Probestücks darstellen, das anhand seines ersten Abschnitts eindeutig definiert worden ist.

5. Videoprüfvorrichtung mit eingebauter Beleuchtung nach Anspruch 4, in der die ersten und zweiten vergleichseinrichtungen erste bzw. zweite Prozessorelemente enthalten und in der die Datenprozessoreinrichtung ferner eine Einrichtung enthält zum gleichzeitigen Freigeben der ersten und zweiten Prozessorelemente.

6. Videoprüfsystem mit eingebauter Beleuchtung nach Anspruch 5, in dem der erste Signalprozessor einen ersten Analog/Digital-Umsetzer enthält und der zweite Signalprozessor einen zweiten Analog/Digital-Umsetzer enthält, wobei die ersten und zweiten verarbeiteten Signale erste bzw. zweite digitalisierte Signale enthalten.

7. Videoprüfvorrichtung mit eingebauter Beleuchtung, die enthält:
eine Beleuchtungseinrichtung zum Beaufschlagen eines zugehörigen Probestücks mit einem einzelnen kurzen Lichtimpuls von hoher Intensität, wobei die Beleuchtungseinrichtung enthält:
mehrere gerichtete elektronische Lichterzeugungselemente;
eine Montageeinrichtung zum Befestigen der jeweiligen Elemente in einer dreidimensionalen Beleuchtungsanordnung, wobei die Montageeinrichtung einen inneren Abschnitt und einen äußeren Abschnitt definiert, und wobei die jeweiligen lichterzeugenden Elemente im inneren Abschnitt befestigt sind, derart, daß sie im wesentlichen auf das zugehörige Probestück gerichtet sind; und
wobei die Montageeinrichtung einen Bildöffnungsabschnitt definiert;
eine Videokameraeinrichtung mit einem Objektivabschnitt zum Erzeugen von Bilddaten aus dem empfangenen Licht des Lichtimpulses, das nach der Reflexion desselben vom zugehörigen Probestück in den Objektivabschnitt einfällt;
eine Einrichtung zum Befestigen des Objektivs, derart, daß es sich durch den Bildöffnungsabschnitt in den inneren Abschnitt, der durch die Montageeinrichtung definiert wird, erstreckt;
erste und zweite Signalprozessoreinrichtungen mit eindeutig definierten ersten bzw. zweiten Verstärkungspegeln;
eine Einrichtung zum Weiterleiten wenigstens eines Teils der Bilddaten zu den ersten und zweiten Signalprozessoren, wobei aus den empfangenen Bilddaten jeweils erste bzw. zweite verarbeitete Signale erzeugt werden;
erste und zweite Datenverarbeitungseinrichtungen zum Vergleichen der empfangenen Signaldaten mit Daten, die annehmbare Probestücke darstellen, um deren Annehmbarkeit zu ermitteln; und
eine Einrichtung zum Weiterleiten der ersten und zweiten verarbeiteten Signale an die ersten bzw. zweiten Datenprozessoren.

8. Videoprüfvorrichtung mit eingebauter Beleuchtung nach Anspruch 7, die ferner eine Einrichtung enthält zum gleichzeitigen Durchführen von Vergleichen mittels der ersten und zweiten Datenprozessoren.

9. Videoprüfvorrichtung mit eingebauter Beleuchtung nach Anspruch 8, in der die Videokameraeinrichtung versehen ist mit einer Einrichtung zum Erzeugen der Bilddaten in Form von Daten, die eine zweidimensionale Matrix von Pixeln darstellen, wobei jedes Pixel einen Grauskalenwert besitzt, der eine Intensität des ihm zugeordneten reflektierten Lichts darstellt.

10. Videoprüfvorrichtung mit eingebauter Beleuchtung nach Anspruch 9, in der:
die ersten und zweiten Signalprozessoreinrichtungen jeweils einen Analog/Digital-Umsetzer enthalten, wobei die ersten und zweiten verarbeiteten Signale jeweils eine digitalisierte Darstellung eines Bildes des zugehörigen Probestücks enthalten;
die ersten und zweiten Datenprozessoren jeweils eine Einrichtung enthalten zum Vergleichen der jeweiligen ersten verarbeiteten Signale mit digitalisierten Daten, die annehmbare Probestücke darstellen.

11. Videoprüfvorrichtung mit eingebauter Beleuchtung nach Anspruch 7, die ferner eine Einrichtung enthält zum Befestigen des Objektivs, derart, daß es sich im wesentlichen vom äußeren Abschnitt bis zum Bildöffnungsabschnitt erstreckt.

12. Videoprüfvorrichtung mit eingebauter Beleuchtung, die enthält:
eine Beleuchtungsanordnung, mit:
mehreren gerichteten Lichterzeugungselementen;
einer Montageeinrichtung zum Befestigen der jeweiligen Elemente in einer dreidimensionalen Beleuchtungsanordnung, wobei die Montageeinrichtung einen inneren Abschnitt und einen äußeren Abschnitt definiert, und wobei die jeweiligen Beleuchtungselemente am inneren Abschnitt befestigt sind, derart, daß sie auf einen zugehörigen Beleuchtungsbereich gerichtet sind, und
wobei die Montageeinrichtung einen Bildöffnungsabschnitt definiert;
eine Videokameraeinrichtung, die einen Objektivabschnitt enthält;
eine Einrichtung zum Befestigen der Videokameraeinrichtung relativ zur Beleuchtungsanordnung, derart, daß sich der Objektivabschnitt durch den Bildöffnungsabschnitt erstreckt und im inneren Abschnitt endet;
eine Einrichtung zum Befördern einer Serie von entsprechenden Probestücken zum zugehörigen Beleuchtungsbereich;
eine Einrichtung zum Ermitteln des Vorhandenseins der jeweiligen zugehörigen Probestücke der Serie innerhalb des Beleuchtungsbereichs;
eine Einrichtung zum wahlweisen Beaufschlagen der mehreren Beleuchtungselemente mit Strom, wobei ein zugehöriges Probestück mit dem hierdurch entstehenden Licht beleuchtet wird;
eine Einrichtung zum Weiterleiten der Bilddaten, die von der Videokameraeinrichtung aus dem Licht erzeugt worden sind, das von dem beleuchteten zugeordneten Probestück reflektiert worden ist und in den Objektivabschnitt derselben einfällt;
eine Einrichtung zum Weiterleiten der Bilddaten zu ersten und zweiten Analog/Digital-Umsetzungseinrichtungen, die jeweils eindeutig definierte Verstärkungspegel besitzen, wodurch erste und zweite digitalisierte Bilddatenabschnitte erzeugt werden;
eine erste Vergleichseinrichtung zum Vergleichen des ersten digitalisierten Bilddatenabschnitts mit Daten, die ein annehmbares Probestück darstellen, daß den mit einem ersten Verstärkungspegel verarbeiteten digitalisierten Daten zugeordnet ist;
eine zweite Vergleichseinrichtung zum Vergleichen des zweiten digitalisierten Bilddatenabschnitts mit Daten, die ein annehmbares Probestück darstellen, das den mit einem zweiten Verstärkungspegel verarbeiteten digitalisierten Daten zugeordnet ist.

13. Videoprüfsystem mit eingebauter Beleuchtung nach Anspruch 12, in dem die ersten und zweiten Vergleichseinrichtungen jeweils unabhängige Datenprozessoren enthalten.

14. Videoprüfsystem mit eingebauter Beleuchtung nach Anspruch 13, das ferner eine Einrichtung enthält zum Ermitteln der Annehmbarkeit der jeweiligen zugehörigen Probe stücke einer Serie in Abhängigkeit von einer Ausgabe von wenigstens einer der ersten und zweiten Vergleichseinrichtungen.

15. Videoprüfsystem mit eingebauter Beleuchtung nach Anspruch 1, das ferner eine Einrichtung enthält zum wahlweisen Wechseln der Lichterzeugungselemente, die die ausgewählten Lichterzeugungselemente der Anordnung bilden, die mit dem Stromimpuls beaufschlagt werden.

## Revendications

1. Appareil de contrôle vidéo à éclairement élaboré comprenant :
une pluralité d'éléments directionnels de production de lumière;
des moyens de montage pour fixer chaque élément de production de lumière de la pluralité d'éléments de production de lumière dans un réseau d'éclairement tridimensionnel, les moyens de montage définissant une partie intérieure et une partie extérieure, chacun des éléments de production de lumière étant fixé à la partie intérieure de telle sorte qu'il est dirigé vers une zone d'éclairement associée;
des moyens de montage définissant une partie d'ouverture;
des moyens formant caméra vidéo pour produire des données d'image à partir de la lumière, appliquée à la lentille et s'étendant à partir de ces moyens; et
des moyens pour fixer la lentille dans la partie intérieure du réseau d'éclairement tridimensionnel de manière qu'elle traverse la partie d'ouverture;
des moyens pour envoyer simultanément une impulsion de courant ayant une valeur sélectionnée à chacun d'éléments de production de lumière sélectionnés du réseau pour réaliser l'éclairement de la zone d'éclairement associée pour éclairer un échantillon associé;
des moyens formant processeur de données pour recevoir, de la part des moyens formant caméra vidéo, une image résultant de l'éclairement de la zone d'éclairement associée par application de l'impulsion de courant unique à la partie des éléments de production de lumière du réseau;
des moyens formant processeur de données comprenant des moyens comparateurs pour comparer des données d'image à des données représentatives d'une gamme de données d'image acceptables; et
des moyens pour déterminer l'acceptabilité de l'échantillon associé en fonction d'un signal de sortie des moyens comparateurs.

2. Système de contrôle vidéo élaboré selon la revendication 1, comprenant en outre des moyens pour modifier de façon sélective les éléments de production de lumière formant les éléments de production de lumière sélectionnés du réseau, auxquels l'impulsion de courant est appliquée.

3. Système de contrôle vidéo à éclairement élaboré selon la revendication 1, comprenant en outre :
des moyens formant diffuseur courbe pour homogénéiser de façon sélective la lumière émise vers la zone d'éclairement associée par les éléments de production de lumière, les moyens formant diffuseur définissant une seconde partie d'ouverture; et
des moyens pour fixer les moyens formant diffuseur entre le réseau d'éclairement tridimensionnel et la zone d'éclairement associée de sorte que la lentille s'étend au moins jusqu'à la seconde partie d'ouverture.

4. Dispositif de contrôle vidéo à éclairement élaboré selon la revendication 3, dans lequel les données d'image produites par les moyens formant caméra vidéo incluent des signaux analogiques représentatifs d'une valeur d'intensité de chaque pixel du réseau bidimensionnel de pixels, et dans lequel le dispositif comprend en outre :
les moyens formant processeur de données incluant un premier processeur de signaux ayant un premier niveau de gain de signal sélectionné, et un second processeur de signaux ayant un second niveau de gain de signal sélectionné différent du premier niveau de gain de signal sélectionné;
des moyens pour communiquer des données d'image au premier processeur de signaux, ce qui permet de former à partir de là des premières données d'image traitées;
des moyens pour communiquer les données d'image au second processeur de signaux, ce qui permet de former à partir de là des secondes données d'image traitées;
les moyens comparateurs comprenant des premiers moyens de corrélation pour corréler les premières données d'image traitées à des données représentatives d'une gamme de données d'image admissible d'une première partie de l'échantillon associé; et
les moyens comparateurs comprenant des seconds moyens de corrélation pour corréler les secondes données d'image traitées à des données représentatives de données d'image admissibles d'une seconde partie de l'échantillon associé défini de façon unique à partir de la première partie de cet échantillon.

5. Dispositif de contrôle vidéo à éclairement élaboré selon la revendication 4, dans lequel les premiers et seconds moyens comparateurs comprennent respectivement des premier et second éléments processeurs et dans lequel les moyens formant processeur de données comprennent en outre des moyens pour valider simultanément les premier et second éléments processeurs.

6. Système de contrôle vidéo à éclairement élaboré selon la revendication 5, dans lequel le premier processeur de signaux comprend un premier convertisseur analogique/numérique, dans lequel le second processeur de signaux comprend un second convertisseur analogique/numérique, les premier et second signaux traités comprenant respectivement des premier et second signaux numérisés.

7. Dispositif de contrôle vidéo à éclairement élaboré comprenant :
des moyens d'éclairement pour envoyer une seule impulsion de lumière de haute intensité et de faible durée à un échantillon associé, lesdits moyens d'éclairement comprenant :
une pluralité d'éléments électroniques de production directionnelle de lumière;
des moyens de montage pour fixer chaque élément de la pluralité d'éléments de production de lumière dans un réseau d'éclairement tridimensionnel, les moyens de montage définissant une partie intérieure et une partie extérieure, chacun des éléments de production de lumière étant fixé à la partie intérieure de telle sorte qu'il est dirigé d'une manière générale vers l'échantillon associé; et
les moyens de montage définissant une partie d'ouverture;
des moyens formant caméra vidéo incluant une partie formant lentille, pour la production de données d'image à partir de la lumière de l'impulsion de lumière reçue dans la partie formant lentille après réflexion de cette lumière par l'échantillon associé;
des moyens pour fixer la lentille de manière qu'elle s'étende à travers la partie d'ouverture, dans la partie intérieure définie par les moyens de montage;
des premiers et seconds moyens formant processeurs de signaux comportant respectivement des premier et second niveaux de gain définis de façon unique;
des moyens pour communiquer au moins une partie des données d'image aux premier et second processeurs de signaux, les premier et second signaux traités étant formés respectivement à partir de données d'image reçues;
des premiers et seconds moyens de traitement de données pour comparer des données de signaux reçues à des données représentatives d'échantillons acceptables pour déterminer leur acceptabilité; et
des moyens pour transmettre les premier et second signaux traités respectivement aux premier et second processeurs de données.

8. Dispositif de contrôle vidéo à éclairement élaboré selon la revendication 7 comprenant en outre des moyens pour exécuter simultanément des comparaisons avec les premier et second processeurs de données.

9. Dispositif de contrôle vidéo à éclairement élaboré selon la revendication 8, dans lequel les moyens formant caméra vidéo comprennent des moyens pour produire les données d'image sous la forme de données représentatives d'un réseau bidimensionnel de pixels, chaque pixel possédant un niveau d'échelle de gris représentatif d'une intensité de lumière réfléchie qui lui est associée.

10. Dispositif de contrôle vidéo à éclairement élaboré selon la revendication 9, dans lequel :
les premier et second moyens formant processeur de signaux comprennent chacun un convertisseur analogique/ numérique, ce qui a pour effet que les premier et second signaux traités comprennent chacun une représentation numérisée d'une image de l'échantillon associé;
les premier et second processeurs de données comprennent chacun des moyens pour comparer chacun des premiers signaux traités à des données numérisées représentatives d'échantillons acceptables.

11. Dispositif de contrôle vidéo à éclairement élaboré selon la revendication 7, comprenant en outre des moyens pour fixer la lentille de telle sorte qu'elle s'étend d'une manière générale depuis la partie extérieure en direction de la partie d'ouverture.

12. Dispositif de contrôle vidéo à éclairement élaboré comprenant :
un réseau d'éclairement comprenant :
une pluralité d'éléments directionnels de production de lumière;
des moyens de montage pour fixer chaque élément de production de lumière de la pluralité d'éléments de production de lumière dans un réseau d'éclairement tridimensionnel, les moyens de montage définissant une partie intérieure et une partie extérieure, chacun des éléments de production de lumière étant fixé à la partie intérieure de telle sorte qu'il est dirigé vers une zone d'éclairement associée;
les moyens de montage définissant une partie d'ouverture;
des moyens formant caméra vidéo comprenant une partie formant lentille;
des moyens pour fixer les moyens formant caméra vidéo en rapport avec le réseau d'éclairement de sorte que la partie formant lentille s'étend à travers la partie d'ouverture, en se terminant dans la partie intérieure;
des moyens pour convoyer une série d'échantillons associés jusqu'à la zone d'éclairement associée;
des moyens pour déterminer une présence de chaque échantillon de la série d'échantillons associés dans la zone d'éclairement; et
des moyens pour appliquer sélectivement un courant à la pluralité d'éléments d'éclairement, un échantillon associé étant éclairé par la lumière provenant des éléments d'éclairement;
des moyens pour communiquer les données d'image produites par les moyens formant caméra vidéo à partir d'une lumière réfléchie par un échantillon associé éclairé, dans la partie formant lentille de ces moyens;
des moyens pour communiquer les données d'image à des premiers et seconds moyens de conversion analogique/ numérique, qui possèdent respectivement des niveaux de gain définis de façon unique, ce qui conduit à la formation de première et seconde parties de données d'image numérisées;
des premiers moyens comparateurs pour comparer la première partie de données d'image numérisées à des données représentatives pour l'acceptabilité d'un échantillon correspondant à des données numérisées traitées à un premier niveau de gain;
des seconds moyens comparateurs pour comparer la seconde partie de données d'image numérisées à des données représentatives de l'acceptabilité d'un échantillon correspondant à des données numérisées traitées à un second niveau de gain.

13. Système de contrôle vidéo à éclairement élaboré selon la revendication 12, dans lequel chacun des premier et second moyens comparateurs comprend des processeurs de données indépendants.

14. Système de contrôle vidéo à éclairement élaboré selon la revendication 13, comprenant en outre des moyens pour déterminer l'acceptabilité de chaque échantillon de la série d'échantillons associés en fonction d'un signal de sortie d'au moins l'un des premier et second moyens comparateurs.

15. Système de contrôle vidéo à éclairement élaboré selon la revendication 1 comprenant en outre des moyens pour modifier sélectivement des éléments de production de lumière formant les éléments de production de lumière sélectionnés du réseau, auxquels l'impulsion de courant est appliquée.
